# NEUE EUROPÄISCHE PATENTSCHRIFT

(11) **EP 3 286 440 B2**
(45) Veröffentlichungstag und Bekanntmachung des Hinweises auf die Entscheidung über den Einspruch: **24.07.2024**
(45) Hinweis auf die Patenterteilung: 26.05.2021
(21) Anmeldenummer: 17732294.8
(22) Anmeldetag: 08.05.2017
(51) Int. Cl.: F16B 5/02, F16B 37/04

(54) **VORRICHTUNG ZUM FESTLEGEN AN EINEM BAUTEIL**
DEVICE FOR SECURING TO A COMPONENT
DISPOSITIF DE FIXATION À UNE PIÈCE

(30) Priorität: 11.07.2016 DE 102016212549
(43) Veröffentlichungstag der Anmeldung: 28.02.2018
(73) Patentinhaber: Springfix Befestigungstechnik GmbH, 73084 Salach (DE)
(72) Erfinder: SANGALLI, Mario, 23900 Lecco (IT); HIPPELI, Sebastian, 97647 Nordheim vor der Rhön (DE); BERNAUER, Jana, 73230 Kirchheim unter Teck (DE)
(74) Vertreter: Ullrich & Naumann PartG mbB
(86) Internationale Anmeldenummer: PCT/DE2017/200037
(87) Internationale Veröffentlichungsnummer: WO 2018/010738

(56) Entgegenhaltungen:
- EP-A1- 0 534 001
- EP-A1- 1 180 605
- EP-B1- 1 215 401
- WO-A1-2008/129854
- DE-A1- 102007 056 457
- DE-A1- 102013 200 999
- DE-U1- 202005 010 885
- DE-U1- 202007 008 154
- JP-B2- 5 388 290
- US-A1- 2014 234 054

## Beschreibung

Die vorliegende Erfindung betrifft eine Vorrichtung zum Festlegen an einem Bauteil, insbesondere Toleranz-Ausgleichs-Element, mit einem Grundelement und einem mit dem Grundelement über eine Schraubverbindung verbindbaren Ausgleichselement, wobei an einem dem Grundelement abgewandten Ende des Ausgleichselements ein Anschlagbereich ausgebildet ist, wobei der Anschlagbereich in Radialrichtung über das Grundelement hinausragt, wobei eine Schraube durch das Ausgleichselement und das Grundelement in ein Haltemittel einbringbar ist und wobei das Ausgleichselement und das Grundelement in einem Transportzustand vollständig oder nahezu vollständig ineinander geschraubt sind.

Vorrichtungen der in Rede stehenden Art sind seit Jahren aus der Praxis bekannt und dienen beispielsweise der Fixierung von zwei Bauteilen, deren Abstand zueinander toleranzbehaftet ist. Entsprechende Toleranz-Ausgleichs-Elemente werden beispielsweise zur Montage von Scheinwerfern in einem Kraftfahrzeug verwendet.

Bei den bekannten Vorrichtungen wird mit dem Eindrehen der Schraube in das Gewinde des Haltemittels das Ausgleichselement aufgrund einer Mitnahmeeinrichtung, die die Schraube und das Ausgleichselement miteinander verbindet, ebenfalls gedreht. Die Mitnahmeeinrichtung ist dabei als Federstahlklemme ausgebildet, die gegen die eingesteckte Schraube drückt. Durch die gegensinnige Drehrichtung der Schraubverbindung und des Gewindes des Haltemittels wird mit dem Eindrehen der Schraube das Ausgleichselement aus dem Grundelement herausgeschraubt, bis es mit seinem Anschlagbereich an das zweite Bauteil anstößt. Somit ermöglicht diese Konstruktion einen Toleranzausgleich bei der Fixierung von zwei Bauteilen, deren Abstand zueinander nicht eindeutig bestimmt ist.

Entsprechende Vorrichtungen sind beispielsweise aus der FR 2 792 039 B1 und der DE 100 34 968 A1 vorbekannt.

Das Ausgleichselement der bekannten Vorrichtungen wird üblicherweise in das Grundelement eingeschraubt und die Vorrichtung in diesem Transportzustand ausgeliefert. Dabei ist problematisch, dass bei einigen der Vorrichtungen das Ausgleichselement während des Transports mehr oder weniger weit aus dem Grundelement herausgeschraubt wird, so dass der Abstand zwischen dem Grundelement und dem Ausgleichselement variiert. Dies ist insbesondere bei der Fließfertigung problematisch, da eine exakte Definition der Arbeitsschritte unter diesen Voraussetzungen nicht möglich ist. Insofern ist es notwendig, die Vorrichtung vor dem Einbau dahingehend zu überprüfen, dass sich das Ausgleichselement gegenüber dem Grundelement in dem Transportzustand befindet. Die Handhabung der bekannten Vorrichtungen ist daher äußerst zeitaufwendig und kostenintensiv.

Des Weiteren beschreibt die US 2014/234054 A1 ein Toleranzausgleichselement mit einem Grundelement und einem mit dem Grundelement über eine Schraubverbindung verbindbaren Ausgleichselement mit einem Anschlagbereich. Zudem ist eine Sicherungslasche vorgesehen, um eine unbeabsichtigte Verdrehung des Anschlagbereichs zu verhindern.

Der vorliegenden Erfindung liegt daher die Aufgabe zugrunde, eine Vorrichtung der eingangs genannten Art derart auszugestalten und weiterzubilden, dass mit konstruktiv einfachen Mitteln die Handhabung verbessert ist.

Erfindungsgemäß wird die voranstehende Aufgabe durch die Merkmale des Anspruchs 1 gelöst. Danach ist die in Rede stehende Vorrichtung dadurch gekennzeichnet, dass ein Schutzelement angeordnet ist und die Vorrichtung in einen Transportzustand bringbar ist, wobei das Schutzelement im Transportzustand den Anschlagbereich seitlich wenigstens teilweise umgibt und in axialer Richtung mit dem Anschlagbereich abschließt oder über den Anschlagbereich hinausragt und das Schutzelement den Anschlagbereich in Umfangsrichtung mit Unterbrechungen umgibt, so dass der Anschlagbereich vor seitlichen Schlägen geschützt ist und dass ein Halteclip einteilig mit dem Schutzelement ausgebildet ist und dass das Haltemittel in dem Halteclip angeordnet ist.

In erfindungsgemäßer Weise ist zunächst erkannt worden, dass das ungewollte Ausdrehen des Ausgleichselements aus dem Grundelement durch seitliche Schläge auf den Anschlagbereich des Ausgleichselements hervorgerufen wird. Diese seitlichen Schläge erfolgen, da eine größere Anzahl von Vorrichtungen als Schüttgut ausgeliefert wird, so dass die Vorrichtungen während des Transports gegeneinander schlagen. In weiter erfindungsgemäßer Weise ist erkannt worden, dass die zugrundeliegende Aufgabe durch die Anordnung zumindest eines Schutzelements in überraschend einfacher Weise gelöst werden kann. Das Schutzelement ist dazu derart ausgebildet, dass es im Transportzustand den Anschlagbereich seitlich zumindest teilweise umgibt und somit vor Schlägen schützt. Ein Ausdrehen des Ausgleichselements aus dem Grundelement während des Transports wird durch diese konstruktive Maßnahme effektiv vermieden.

Um den Anschlagbereich besonders effektiv gegenüber seitlichen Schlägen zu schützen, ist das Schutzelement derart ausgebildet, dass es in axialer Richtung mit dem Anschlagbereich abschließt oder über den Anschlagbereich hinausragt, wenn sich die Vorrichtung im Transportzustand befindet.

In weiter erfindungsgemäßer Weise umgibt das Schutzelement den Anschlagbereich in Umfangsrichtung mit Unterbrechungen. Dazu kann das Schutzelement in dem den Anschlagbereich umgebenden Abschnitt zylinderförmig -mit Unterbrechungen - ausgebildet sein, so dass der Anschlagbereich vollständig gegen seitliche Schläge geschützt ist. Mit anderen Worten kann das Schutzelement einen Rand aufweisen, der den Anschlagbereich umgibt bzw. in sich aufnimmt. Alternativ ist denkbar, dass das Schutzelement mehrere Segmente bzw. Stäbe aufweist, die in Umfangsrichtung um den Anschlagbereich angeordnet sind und sich in Axialrichtung entlang des Randes des Anschlagbereichs erstrecken.

In vorteilhafter Weise ist das Schutzelement an dem Grundelement befestigt, beispielsweise durch eine form- und/oder kraftschlüssige Verbindung. Das Schutzelement kann dazu beispielsweise eine Öffnung aufweisen, in die das Grundelement einpressbar ist. Bei einer solchen Konstruktion kann an der Innenwandung der Öffnung und/oder der korrespondierenden Außenwandung des Grundelements eine Verzahnung ausgebildet sein, um eine sichere Verbindung zu erreichen. Weiterhin kann das Schutzelement beispielsweise aus einem Kunststoff hergestellt sein kann, wohingegen das Grundelement aus Metall, beispielsweise Stahl, bestehen kann. Alternativ ist denkbar, dass das Schutzelement einteilig mit dem Grundelement ausgebildet ist.

In weiter vorteilhafter Weise kann der Anschlagbereich durch eine Scheibe bzw. scheibenförmig realisiert sein. Die Scheibe kann einen integralen Bestandteil des Ausgleichelements bilden, d.h. einteilig mit diesem ausgebildet sein. Alternativ kann der als Scheibe realisierte Anschlagbereich einen Durchgang aufweisen, an dem ein Vorsprung, insbesondere in Form eines Zylinders, ausgebildet ist, mit dem der Anschlagbereich form- und/oder kraftschlüssig an dem Ausgleichselement festgelegt ist. Im Konkreten kann der Vorsprung in oder auf das Ausgleichselement gepresst sein.

Um die Vorrichtung an dem Bauteil festzulegen, ist ein Halteclip einteilig mit dem Schutzelement ausgebildet, wobei der Halteclip über das Bauteil schiebbar ist, um die Vorrichtung an dem Bauteil festzulegen. Dabei ist das Haltemittel in dem Halteclip angeordnet. Zusätzlich ist denkbar, dass das Haltemittel über mindestens zwei Befestigungshaken in dem Halteclip eingefasst ist, wobei sich die Befestigungshaken unterschiedlich weit von dem Halteclip weg erstrecken. Durch diese konstruktive Maßnahme ist es möglich den Halteclip und somit die Vorrichtung auf Bauteile unterschiedlicher Dicken, beispielsweise 0,8 mm bis 4 mm starke Bleche, aufzuschieben, wobei das Haltemittel - die Mutter - stets parallel zur Auflagefläche des Halteclips ausrichtbar ist. In weiter vorteilhafter Weise können die an dem Bauteil anliegenden Anlageflächen des Halteclips bis auf einen Durchgang für die Schraube vollflächig ausgebildet sein. Dadurch wird die Auflagefläche des Halteclips maximiert, um höheren Anzugsmomenten bzw. größeren Blechausschnitten Stand zu halten bzw. ein Setzen, insbesondere bei einem aus Kunststoff hergestellten Bauteil, zu verhindern.

In besonders vorteilhafter Weise können das Grundelement und das Ausgleichs-element miteinander korrespondierende Gewinde aufweisen, die die Schraubverbindung bilden, wobei zumindest eines der Gewinde unterbrochen ist, um ein vollständiges Auseinanderschrauben von Grundelement und Ausgleichselement zu verhindern. Durch diese konstruktive Maßnahme ist auf verblüffend einfache Weise eine effektive Verliersicherung realisiert.

Weiterhin ist denkbar, dass an dem Grundelement oder an dem Schutzelement, eine Nase ausgebildet ist, wobei die Nase im Transportzustand in eine Öffnung des Anschlagbereiches eingreift. Die Nase dient somit als Transportsicherung, welche ein ungewolltes Verdrehen des Ausgleichselements gegenüber dem Grundelement verhindert. Dadurch ist neben dem Schutzelement eine zweite Maßnahme geschaffen, um zu gewährleisten, dass das Ausgleichselement und das Grundelement während des Transports in einem definierten, vollständig oder nahezu vollständig ineinander geschraubten Zustand verbleiben.

In besonders vorteilhafter Weise kann die Nase an einem Biegeelement angeordnet sein, so dass die Nase über das Biegeelement in Axialrichtung von dem Anschlagbereich wegbiegbar ist. Somit ist nach Überwindung eines definierten Drehmoments bzw. einer definierten Kraft das Ausgleichselement aus dem Grundelement herausschraubbar. In raffinierter Weise ist weiterhin denkbar, dass an dem Grundelement eine Ausnehmung ausgebildet ist, in die die Nase und/oder das Biegeelement eintauchen, wenn die Nase von dem Anschlagbereich weggebogen wird.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Aufsicht ein Ausführungsbeispiel einer nicht erfindungsgemäßen Vorrichtung,
- Fig. 2: in einer schematischen, geschnittenen Darstellung das Ausführungsbeispiel gemäß Figur 1 und
- Fig. 3: in einer weiteren schematischen, geschnittenen Darstellung das Ausführungsbeispiel gemäß Figur 1.

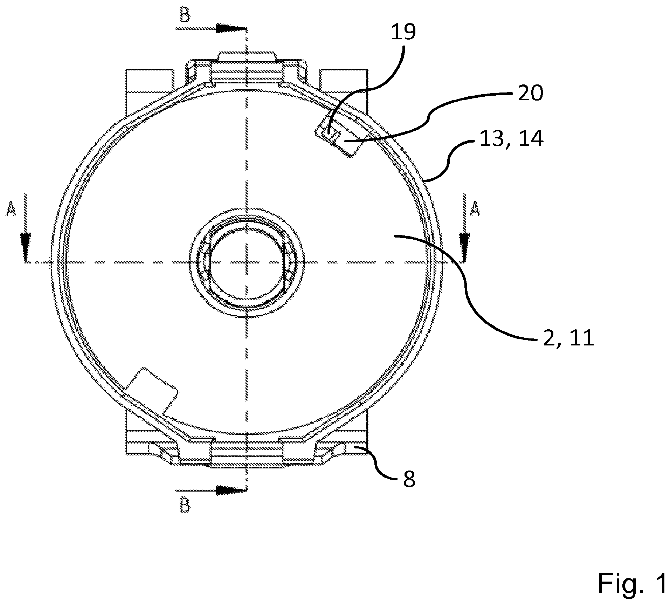

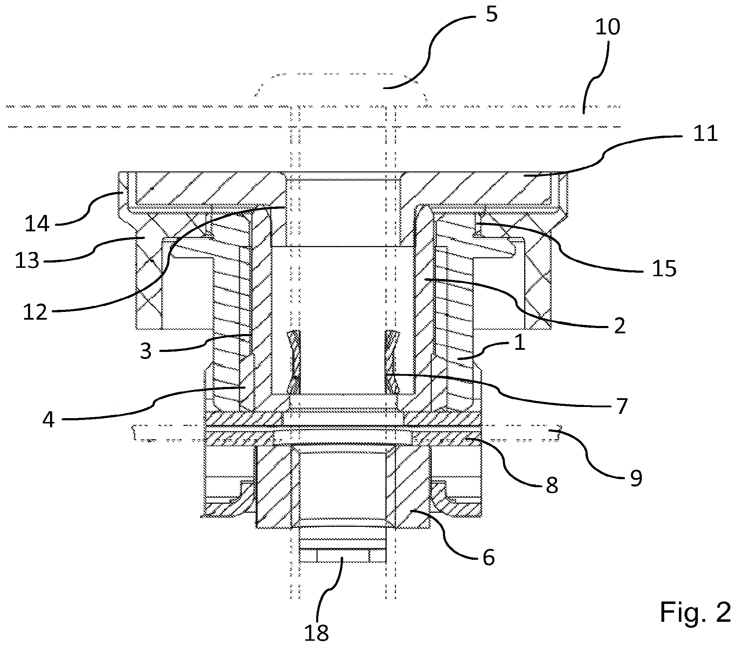

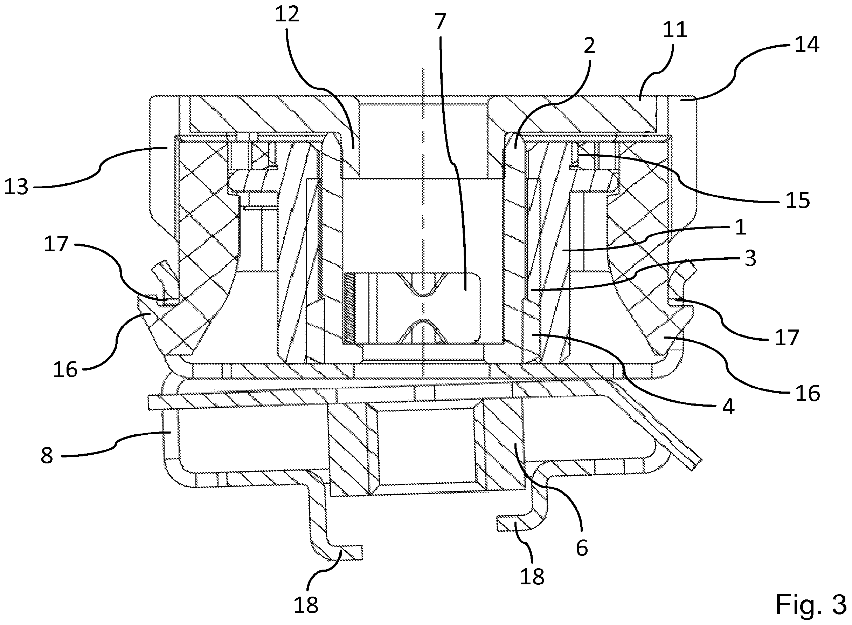

In den Figuren 1 bis 3 ist ein Ausführungsbeispiel einer nicht erfindungsgemäßen Vorrichtung dargestellt. In Figur 2 ist ein Schnitt entlang der in Figur 1 eingezeichneten Schnittebene A - A dargestellt. In Figur 3 ist ein Schnitt entlang der in Figur 1 eingezeichneten Schnittebene B - B dargestellt.

Die Vorrichtung umfasst ein Grundelement 1 und ein mit dem Grundelement 1 verbundenes Ausgleichselement 2. Das Grundelement 1 weist ein Gewinde 3 auf, das mit dem Gewinde 4 des Ausgleichselements 2 korrespondiert und eine Schraubverbindung bildet. In den Figuren 2 und 3 ist deutlich zu erkennen, dass das Gewinde 3 des Grundelements 1 verkürzt ausgebildet ist, sich nämlich nicht über die gesamte Innenwandung des Grundelements 1 hinweg erstreckt. Dadurch wird erreicht, dass das Ausgleichselement 2 nicht vollständig aus dem Grundelement 1 herausschraubbar ist, um nämlich eine zuverlässige Verliersicherung zu realisieren.

Durch das Grundelement 1 und das Ausgleichselement 2 ist eine Schraube 5 in ein Haltemittel 6, insbesondere eine Mutter, einbringbar. Des Weiteren ist eine Mitnahmeeinrichtung 7 in dem Ausgleichselement 2 angeordnet, die im hier dargestellten Ausführungsbeispiel als Federklemme realisiert ist. Mit dem Eindrehen der Schraube 5 in das Haltemittel 6 wird das Ausgleichselement 2 durch die Mitnahmeeinrichtung 7 ebenfalls gedreht. Da sich die Drehrichtung der durch die Gewinde 3, 4 realisierten Schraubverbindung von der Drehrichtung des Gewindes des Haltemittels 6 unterscheidet, wird das Ausgleichselement 2 aus dem Grundelement 1 herausgeschraubt.

In den Figuren 2 und 3 ist des Weiteren gezeigt, dass die Vorrichtung über einen Halteclip 8 an einem Bauteil 9 festgelegt ist. Durch das Ausdrehen des Ausgleichselements 2 aus dem Grundelement 3 ist die Vorrichtung mit einem zweiten Bauteil 10 verspannbar. Dazu wird das Ausgleichselement 2 über die Schraube 5 und die Mitnahmeeinrichtung 7 so weit aus dem Grundelement 1 herausgedreht, bis der Anschlagbereich 11 an dem zweiten Bauteil 10 anliegt.

Zur Vereinfachung der Darstellung sind in Figur 2 die Schraube 5, das erste Bauteil 9 und das zweite Bauteil 10 jeweils mit einer gestrichelten Linie dargestellt.

Der Anschlagbereich 11 ist als Scheibe ausgebildet, die einen Vorsprung 12 aufweist, mit welchem der Anschlagbereich 11 in die Öffnung des Ausgleichselements 2 eingepresst ist. Dabei können das Ausgleichselement 2 und der Anschlagbereich 11 aus einem Metall hergestellt sein. In den Figuren 2 und 3 ist die Vorrichtung in ihrem Transportzustand gezeigt, in dem das Ausgleichselement 2 nämlich vollständig bzw. nahezu vollständig in das Grundelement 1 eingeschraubt ist. In dem Transportzustand ist der Anschlagbereich 11 von dem Schutzelement 13 bzw. dem Rand 14 des Schutzelement 13 seitlich nahezu vollständig umgeben und somit vor seitlichen Schlägen geschützt. Dadurch wird erreicht, dass das Ausgleichselement 2 während des Transports nicht ungewollt aus dem Grundelement 1 herausgeschraubt wird. An dieser Stelle sei darauf hingewiesen, dass das Schutzelement 13 bzw. der Rand 14 den Anschlagbereich 11 nicht zwangsweise vollständig umgeben muss.

Das Schutzelement 13 ist mit dem Grundelement 1 verpresst, wobei hierzu an dem Grundelement 1 eine Verzahnung 15 vorgesehen ist. Das Grundelement 1 kann aus Metall, das Schutzelement 13 aus Kunststoff hergestellt sein.

Das Schutzelement 13 weist des Weiteren Vorsprünge 16 auf, die in Ausnehmungen 17 des Halteclips 8 eingreifen. Somit ist der Halteclip 8 über das Schutzelement 13 mit dem Grundelement 1 verbunden bzw. an diesem festgelegt. In Figur 3 ist deutlich zu erkennen, dass die Mutter 6 über zwei Befestigungshaken 18 in dem Halteclip 8 eingefasst sind. Die Befestigungshaken 18 erstrecken sich unterschiedlich weit von dem Halteclip 8 weg, so dass der Halteclip 8 an Bauteilen 1 unterschiedlicher Dicke festgelegt werden kann, wobei die Mutter 6 stets parallel zur Auflagefläche des Halteclips 8 steht. Die Auflagefläche des Halteclips 8 ist vollflächig ausgebildet, so dass der Halteclip 8 auch höheren Anzugsmomenten stand hält.

Zur Realisierung einer Transportsicherung weist das Schutzelement 13 eine Nase 19 auf, die im Transportzustand in eine Öffnung 20 des Anschlagbereichs 11 eingreift und somit ein ungewolltes Verdrehen von Grundelement 1 und Ausgleichselement 2 verhindert. Dazu ist die Nase 19 an einem Biegeelement angeordnet, über das die Nase 19 in Axialrichtung von dem Anschlagbereich 11 weg biegbar ist. Hierzu umfasst das Schutzelement 13 eine Ausnehmung, in die die Nase 19 und das Biegeelement eintauchen, wenn die Nase 19 von dem Anschlagbereich 11 weggebogen wird.

Hinsichtlich vorteilhafter Ausgestaltungen der erfindungsgemäßen Vorrichtung wird zur Vermeidung von Wiederholungen auf den allgemeinen Teil der Beschreibung sowie auf die abhängigen Ansprüche verwiesen.

### Bezugszeichenliste

- 1: Grundelement
- 2: Ausgleichselement
- 3: Gewinde (Grundelement)
- 4: Gewinde (Ausgleichselement)
- 5: Schraube
- 6: Haltemittel
- 7: Mitnahmeeinrichtung
- 8: Halteclip
- 9: erstes Bauteil
- 10: zweites Bauteil
- 11: Anschlagbereich
- 12: Vorsprung
- 13: Schutzelement
- 14: Rand
- 15: Verzahnung
- 16: Vorsprung (Schutzelement)
- 17: Ausnehmung
- 18: Befestigungshaken
- 19: Nase
- 20: Öffnung

## Patentansprüche

1. Vorrichtung zum Festlegen an einem Bauteil (9, 10), insbesondere Toleranz-Ausgleichs-Element, mit einem Grundelement (1) und einem mit dem Grundelement (1) über eine Schraubverbindung verbindbaren Ausgleichselement (2), wobei an einem dem Grundelement (1) abgewandten Ende des Ausgleichselements (2) ein Anschlagbereich (11) ausgebildet ist, wobei der Anschlagbereich (11) in Radialrichtung über das Grundelement (1) hinausragt, wobei eine Schraube (5) durch das Ausgleichselement (2) und das Grundelement (1) in ein Haltemittel (6) einbringbar ist und wobei das Ausgleichselement (2) und das Grundelement (1) in einem Transportzustand vollständig oder nahezu vollständig ineinander geschraubt sind,
**dadurch gekennzeichnet, dass** ein Schutzelement (13) angeordnet ist und die Vorrichtung in einen Transportzustand bringbar ist, wobei das Schutzelement (13) im Transportzustand den Anschlagbereich (11) seitlich wenigstens teilweise umgibt und in axialer Richtung mit dem Anschlagbereich (11) abschließt oder über den Anschlagbereich (11) hinausragt und das Schutzelement (13) den Anschlagbereich (11) in Umfangsrichtung mit Unterbrechungen umgibt, so dass der Anschlagbereich (11) vor seitlichen Schlägen geschützt ist und dass ein Halteclip (8) einteilig mit dem Schutzelement (13) ausgebildet ist und dass das Haltemittel (6) in dem Halteclip (8) angeordnet ist.

2. Vorrichtung nach Anspruch 1, **dadurch gekennzeichnet, dass** das Schutzelement (13) an dem Grundelement (1) befestigt oder einteilig mit dem Grundelement (1) ausgebildet ist.

3. Vorrichtung nach Anspruch 1 oder 2, **dadurch gekennzeichnet, dass** der Anschlagbereich (11) scheibenförmig ausgebildet ist.

4. Vorrichtung nach einem der Ansprüche 1 bis 3, **dadurch gekennzeichnet, dass** das Haltemittel (6) über mindestens zwei Befestigungshaken (18) in dem Halteclip (8) eingefasst ist und dass sich die Befestigungshaken (18) unterschiedlich weit von dem Halteclip (8) weg erstrecken.

5. Vorrichtung nach einem der Ansprüche 1 bis 4, **dadurch gekennzeichnet, dass** die an dem Bauteil (9) anliegenden Anlageflächen des Halteclips (8) bis auf einen Durchgang für die Schraube (5) vollflächig ausgebildet sind.

6. Vorrichtung nach einem der Ansprüche 1 bis 5, **dadurch gekennzeichnet, dass** das Grundelement (1) und das Ausgleichselement (2) miteinander korrespondierende Gewinde (3, 4) aufweisen, die die Schraubverbindung bilden, wobei eines der Gewinde (3, 4) unterbrochen ist, um ein vollständigen Auseinanderschrauben von Grundelement (1) und Ausgleichselement (2) zu verhindern.

7. Vorrichtung nach einem der Ansprüche 1 bis 6, **dadurch gekennzeichnet, dass** an dem Grundelement (1) oder dem Schutzelement (13), eine Nase (19) ausgebildet ist, wobei die Nase (19) im Transportzustand in eine Öffnung (20) des Anschlagbereichs (11) eingreift.

8. Vorrichtung nach Anspruch 7, **dadurch gekennzeichnet, dass** die Nase (19) an einem Biegeelement angeordnet ist und dass die Nase (19) über das Biegeelement in Axialrichtung von dem Anschlagbereich (11) weg biegbar ist.

9. Vorrichtung nach Anspruch 7 oder 8, **dadurch gekennzeichnet, dass** an dem Grundelement (1) oder dem Schutzelement (13) eine Ausnehmung ausgebildet ist, in die die Nase (19) und/oder das Biegeelement eintauchen, wenn die Nase (19) von dem Anschlagbereich (11) weggebogen wird.

## Claims

1. Device for securing to a component (9, 10), in particular a tolerance compensation element, having a base element (1) and a compensation element (2) which can be connected to the base element (1) by means of a screw connection, wherein at an end of the compensation element (2) facing away from the base element (1) a stop region (11) is formed, wherein the stop region (11) protrudes in a radial direction beyond the base element (1), wherein a screw (5) can be introduced through the compensation element (2) and the base element (1) into a retention means (6), and wherein the compensation element (2) and the base element (1) in a transport state are screwed completely or almost completely into each other, **characterised in that** a protection element (13) is arranged and the device can be moved into a transport state, wherein the protection element (13) in the transport state at least partially surrounds the stop region (11) laterally and terminates in an axial direction with the stop region (11) or protrudes beyond the stop region (11) and the protection element (13) surrounds the stop region (11) in a peripheral direction with interruptions so that the stop region (11) is protected from lateral impacts and **in that** a retention clip (8) is constructed integrally with the protection element (13) and **in that** the retention means (6) is arranged in the retention clip (8).

2. Device according to claim 1, **characterised in that** the protection element (13) is secured to the base element (1) or is constructed integrally with the base element (1).

3. Device according to claim 1 or claim 2, **characterised in that** the stop region (11) is constructed in a disc-like manner.

4. Device according to any one of claims 1 to 3, **characterised in that** the retention means (6) is surrounded by means of at least two securing hooks (18) in the retention clip (8) and **in that** the securing hooks (18) extend to different extents away from the retention clip (8).

5. Device according to any one of claims 1 to 4, **characterised in that** the abutment faces of the retention clip (8) which abut the component (9) are constructed as complete surfaces with the exception of a passage for the screw (5).

6. Device according to any one of claims 1 to 5, **characterised in that** the base element (1) and the compensation element (2) have mutually corresponding threads (3, 4) which form the screw connection, wherein one of the threads (3, 4) is interrupted in order to prevent the base element (1) and compensation element (2) from being completely unscrewed.

7. Device according to any one of claims 1 to 6, **characterised in that** a projection (19) is constructed on the base element (1) or the protection element (13), wherein the projection (19) in the transport state engages in an opening (20) of the stop region (11).

8. Device according to claim 7, **characterised in that** the projection (19) is arranged on a bending element and **in that** the projection (19) can be bent via the bending element in an axial direction away from the stop region (11).

9. Device according to claim 7 or 8, **characterised in that** there is constructed in the base element (1) or the protection element (13) a recess in which the projection (19) and/or the bending element is/are introduced when the projection (19) is bent away from the stop region (11).

## Revendications

1. Dispositif destiné à être fixé à un composant (9, 10), plus particulièrement élément de compensation de tolérance, avec un élément de base (1) et un élément de compensation (2) pouvant être relié avec l'élément de base (1) par l'intermédiaire d'une liaison vissée, dans lequel, au niveau d'une extrémité, opposée à l'élément de base (1), de l'élément de compensation (2), est réalisée une partie de butée (11), dans lequel la partie de butée (11) dépasse dans la direction radiale au-delà de l'élément de base (1), dans lequel une vis (5) peut être insérée à travers l'élément de compensation (2) et l'élément de base (1) dans un moyen de maintien (6) et dans lequel l'élément de compensation (2) et l'élément de base (1) sont vissés entièrement ou presque entièrement l'un dans l'autre dans un état de transport,
**caractérisé en ce qu'**un élément protecteur (13) est disposé et le dispositif peut être amené dans un état de transport, dans lequel l'élément protecteur (13) entoure, dans l'état de transport, la partie de butée (11) latéralement au moins partiellement et se termine dans la direction axiale avec la partie de butée (11) ou dépasse au-delà de la partie de butée (11) et l'élément protecteur (13) entoure la partie de butée (11) dans la direction de la circonférence avec des interruptions, de façon à ce que la partie de butée (11) soit protégée des chocs latéraux et ce qu'un clip de maintien (8) est réalisé d'une seule pièce avec l'élément protecteur (13) et **en ce que** le moyen de maintien (6) est disposé dans le clip de maintien (8).

2. Dispositif selon la revendication 1, **caractérisé en ce que** l'élément protecteur (13) est fixé à l'élément de base (1) ou est réalisé d'une seule pièce avec l'élément de base (1).

3. Dispositif selon la revendication 1 ou 2, **caractérisé en ce que** la partie de butée (11) présente la forme d'un disque.

4. Dispositif selon l'une des revendications 1 à 3, **caractérisé en ce que** le moyen de maintien (6) est inséré par l'intermédiaire d'au moins deux crochets de fixation (18) dans le clip de maintien (8) et **en ce que** les crochets de fixation (18) s'éloignent du clip de maintien (8) à des distances différentes.

5. Dispositif selon l'une des revendications 1 à 4, **caractérisé en ce que** les surfaces d'appui, s'appuyant contre le composant (9), du clip de maintien (8), sont réalisées sur toute la surface excepté un passage pour la vis (5).

6. Dispositif selon l'une des revendications 1 à 5, **caractérisé en ce que** l'élément de base (1) et l'élément de compensation (2) comprennent des filetages (3, 4) correspondants entre eux, qui constituent la liaison vissée, dans lequel un des filetages (3, 4) est interrompu, afin d'empêcher un dévissage complet de l'élément de base (1) et de l'élément de compensation (2).

7. Dispositif selon l'une des revendications 1 à 6, **caractérisé en ce que**, sur l'élément de base (1) ou l'élément protecteur (13), un embout (19) est réalisé, dans lequel l'embout (19) s'emboîte, dans l'état de transport, dans une ouverture (20) de la partie de butée (11).

8. Dispositif selon la revendication 7, **caractérisé en ce que** l'embout (19) est disposé sur un élément de flexion et **en ce que** l'embout (19) peut être plié par l'intermédiaire de l'élément de flexion dans la direction axiale loin de la partie de butée (11).

9. Dispositif selon la revendication 7 ou 8, **caractérisé en ce que**, sur l'élément de base (1) ou l'élément protecteur (13), est réalisé un évidement, dans lequel plongent l'embout (19) et/ou l'élément de flexion lorsque l'embout (19) est plié loin de la partie de butée (11).
